# EUROPEAN PATENT SPECIFICATION

(11) **EP 2 292 359 B1**
(45) Date of publication and mention of the grant of the patent: **17.10.2012**
(21) Application number: 10172675.0
(22) Date of filing: 12.08.2010
(51) Int. Cl.: B23D 59/02

(54) **Fluid supply mechanism for rotary tool**
Flüssigkeitsliefermechanismus für ein Drehwerkzeug
Mécanisme d'alimentation de fluide pour outil rotatif

(30) Priority: 02.09.2009 JP 2009203018
(43) Date of publication of application: 09.03.2011
(73) Proprietor: Kanefusa Kabushiki Kaisha, Niwa-gun, Aichi 480-0192 (JP)
(72) Inventor: Ide, Tsuyoshi, Niwa-gun Aichi 480-0192 (JP); Nishikawa, Yukiomi, Niwa-gun Aichi 480-0192 (JP); Takeyama, Ken, Niwa-gun Aichi 480-0192 (JP); Nakano, Takao, Niwa-gun Aichi 480-0192 (JP)
(74) Representative: Prüfer & Partner GbR European Patent Attorneys

(56) References cited:
- JP-A- 9 300 340
- US-A- 2 807 256

## Description

### Technical Field

The present invention relates to a fluid supply mechanism for a rotary tool as per the preambles of independent claims 1 and 2. US 2 807 256 discloses such a fluid supply mechanism. In particular, the present invention relates to a fluid supply mechanism that (1) can adequately supply a fluid, such as lubricant, during machining a work and that (2) can successfully cool and/or lubricate the rotary tool, even if the thickness of a boss of the rotary tool attached to a cutting equipment is larger than that of a base provided with teeth along an outer periphery thereof.

### Background Art

A rotary tool, such as a circular saw blade, is attached to a rotary shaft of a circular sawing machine and rotated at high speed. However, there is the disadvantage that the temperature of the rotary tool rises abnormally due to friction during cutting a work, and a base or teeth thereof are broken or distorted to reduce its life. Therefore, during machining a work, a fluid, such as lubricant or water, is supplied to the rotary tool to lubricate and/or cool the same. When the fluid is directly supplied to the rotary tool in this manner, lubricating effect or cooling effect becomes large, but there is contamination of the work during machining and a large consumption of the fluid is not economical.

Therefore, a technique to pneumatically and forcibly supply a fluid is practically used. For example, a fluid, such as lubricant, is pneumatically supplied from the rotary shaft to the rotary tool via fluid passages provided in shims which clamp the rotary tool. If this technique is adopted, since it is made possible to supply a small amount of fluid, such as lubricant, the contamination of work and the amount of fluid used can be kept at a minimum. Also this technique is effective because of its sufficient lubricating/cooling capacity.

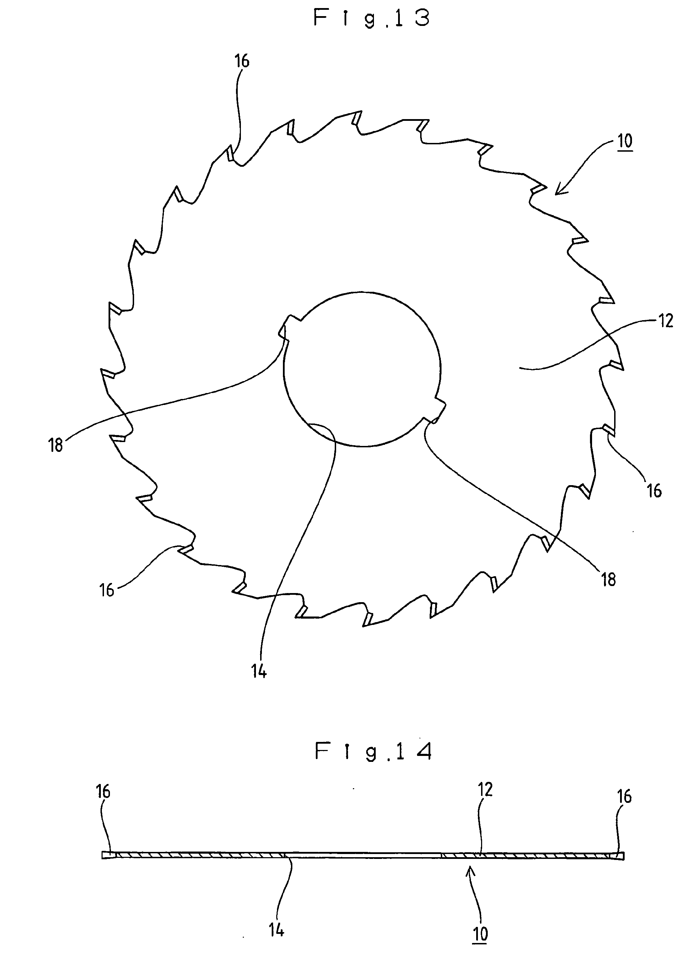

The present invention relates to an extremely-effective fluid supply mechanism for a rotary tool having a thick boss that cannot sufficiently attain lubricating and cooling effects, while the mechanism basically adopting the configuration in Publication of Japanese unexamined patent application No. 2004-98188 (Literature 1). Therefore, in order to understand the present invention, it is quite effective to know detailed construction of the configuration mentioned in the Literature 1. Then, with reference to Figs. 13 to 21, the configuration of the Literature 1 where a rotary tool having a thick boss is applied will be explained. Incidentally, though exemplified by a circular saw blade 10, the rotary tool is not limited thereby.

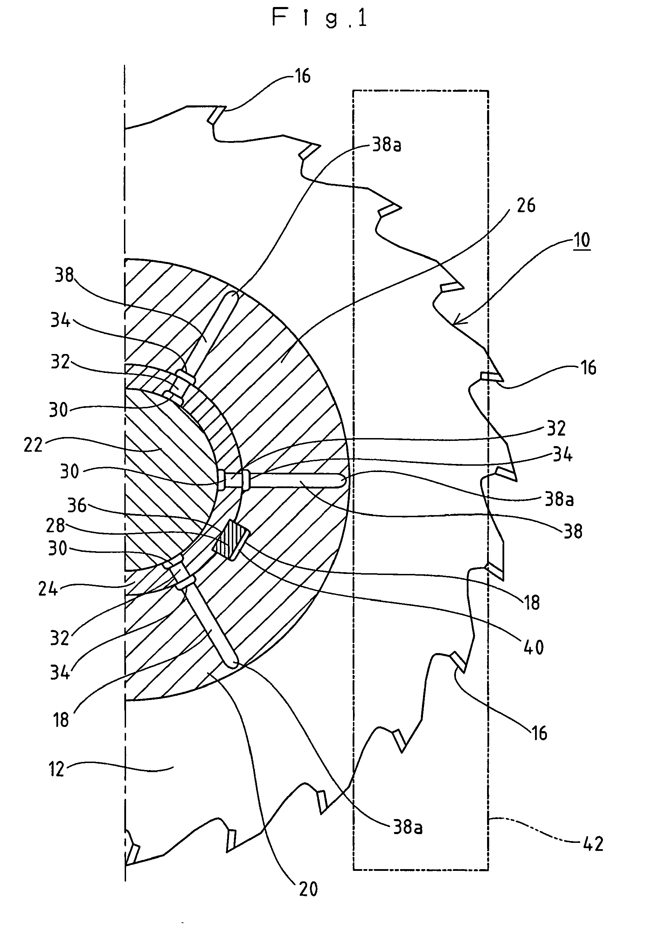

Fig. 13 shows a planar surface of the circular saw blade 10, where a circular opening 14 with a required diameter is formed in the center of a base 12 with an entirely even thickness formed in a disc shape. A sleeve (not shown) provided on a rotary shaft of a circular saw unit is inserted into the circular opening 14. Teeth 16, each of which a chip is bonded, are provided on the outer periphery of the base 12 at required pitches in the circumferential direction thereof. Incidentally, a pair of notches provided on the circular opening 14 in a diametrical direction is key slots 18. These are for inserting keys (Fig. 1) that fix the circular saw blade 10 to the sleeve of the rotary shaft at a predetermined position. In this circular saw blade 10, as shown in Fig. 14 of its side view, the base 12 has an entirely even thickness, so that said saw blade 10 is referred to as isothick type base.

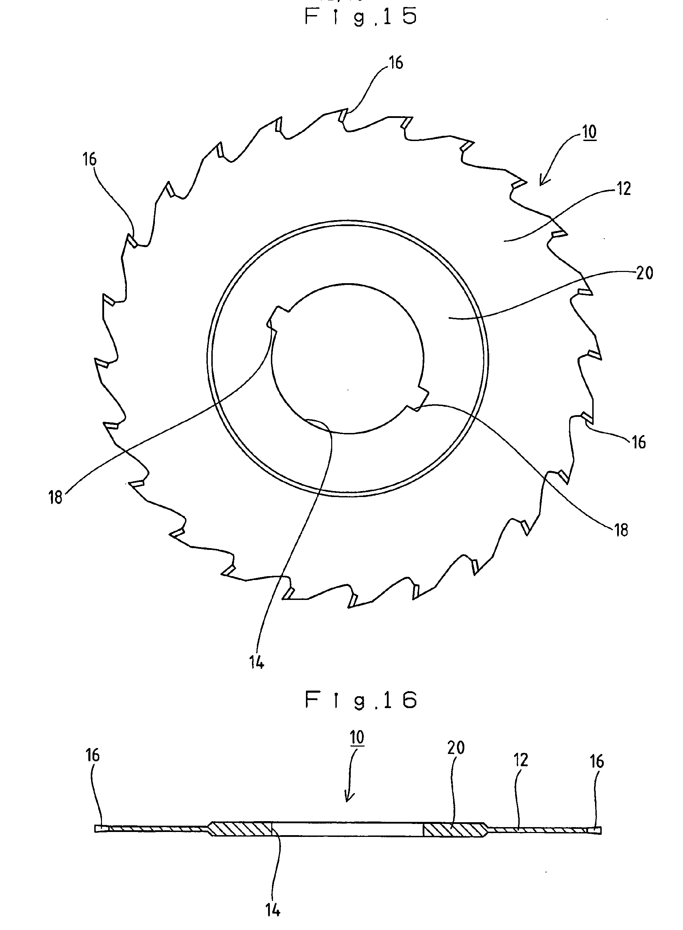

Fig. 15 shows the circular saw blade 10 usable in the fluid supply mechanism of the present invention. In this circular saw blade 10, the thickness of a boss 20 into which the rotary shaft being inserted is set larger than that of the outer periphery of the base 12. The boss 20 with such a large thickness endures heavy cutting of a work, and therefore it is very useful for certain kinds of target works. In the present application, this is referred to as the circular saw blade 10 having a thick boss type base (or a thick boss).

Next, the case where the circular saw 10 having the thick boss type base shown in Fig. 15 is used in the fluid supply mechanism of the Literature 1 will be explained with reference to Figs. 17 and 18. A sleeve 24 with a required length is attached to the rotary shaft 22 of the circular saw unit, and the circular saw blade 10 is attached to the sleeve 24 through the circular opening 14. A required number of doughnut-like shims 26 are also attached to the sleeve 24 in the axial direction thereof to clamp and fix the boss 20 of the circular saw blade 10 from both sides.

Incidentally, a plurality of circular saw blades 10 are often attached on the outer periphery of the sleeve 24 in the axial direction at intervals corresponding to the thickness of the shim 26 to make up a so-called gang saw. However, only one circular saw blade 10 may be used. All the circular saw blade 10, the shims 26 and the sleeve 24 are fixed at predetermined positions in their peripheral directions by forcibly inserting rectangular keys 28 with required lengths into the key slots 18 of the circular opening 14.

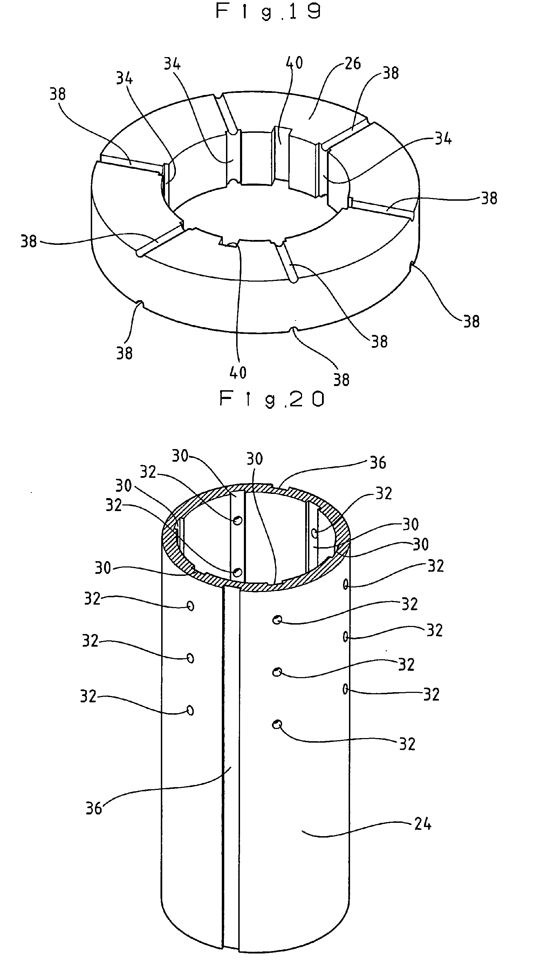

Air including lubricant, coolant or the like is supplied to the sleeve 24 and the shims 26 under pressure so that the base 12 of the circular saw blade 10 is supplied with the lubricant, coolant or the like. That is, as shown in Fig. 20, six gutter-like passages 30 are formed, for example, at every central angle of 60° on the inner surface of the sleeve 24 so as to extend in the axial direction. Also, through holes 32 are provided at predetermined intervals in the outer surface of the sleeve 24 to be communicated to the gutter-like passages 30 in the radial direction. These through holes 32 are also correspondingly communicated to passages 34 formed on the inner surface of the shim 26 that will be explained later. Incidentally, in Fig. 20, two key slots 36 formed on the outer surface of the sleeve 24 in the axial direction are for inserting the keys 28.

As shown in Fig. 19, six passages 34 (explained above) are formed on the inner surface of the doughnut-like shim 26 so as to extend in the axial direction at every central angle of 60°. Also, gutters 38 corresponding to the respective passages 34 in a communicated manner are provided on both sides of the shim 26 (six in Fig. 19). Then, the distal end of each gutter 38 in the radial direction opens to the outer surface of the shim 26. Incidentally, key slots 40 which correspond to the key slots 36 of the sleeve 24 are formed on the inner surface of the shim 26.

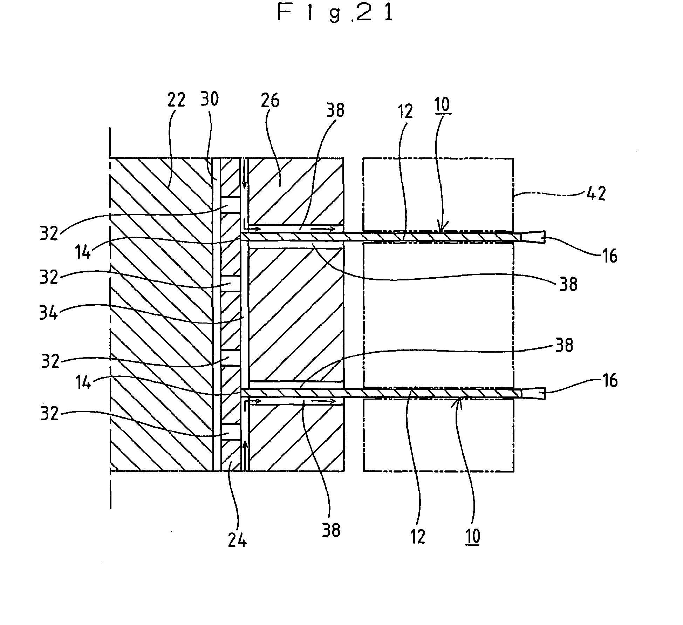

The circular saw blades 10 having an isothick type base shown in Fig. 13 are assembled by using the sleeve 24 and the shims 26 as shown in Fig. 21. That is, a required number of circular saw blades 10 are attached to the sleeve 24, and the key slots 36 of the sleeve 24, the key slots 18 of the circular saw blades 10 and the key slots 40 of each shim 26 are correspondingly aligned with one another. Then, by inserting the keys 28 forcibly into these key slots, the sleeve 24, the circular saw blades 10 and the shims 26 are fixed at their predetermined positions. Also, the through holes 32 of the sleeve 24 are correspondingly communicated to the passages 34 of the shims 26.

Next, in Fig. 21, when, for example, air including lubricant, is transferred under pressure by a pressure feed mechanism (not shown) from one end portion of the sleeve 24 to the gutter-like passages 30, the air including lubricant is supplied to the base 12 of each circular saw blade 10 via the passages 30 → the through holes 32 of the sleeve 24 → the passages 34 of the shims 26 → the gutters 38 of each shim 26. At this time, the circular saw blades 10 are rotating at high speed so that the lubricant is centrifugally spread in the form of mist from the gutters 38 of the shims 26, and diffusely supplied up to the distal ends of the bases 12. Thereby, the bases 12 of the circular saw blades 10 are sufficiently lubricated and cooled.

### Technical Problem

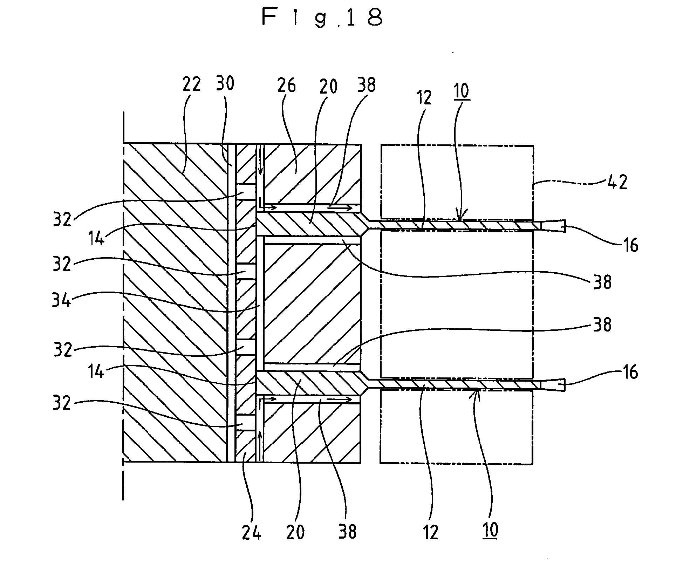

As explained above, according to the mist supply mechanism of the Literature 1, it is possible to supply a fluid, such as lubricant, very effectively to the circular saw blade 10 having an isothick type base shown in Figs. 13 and 14. However, in the circular saw blade 10 having a thick boss type base shown in Figs.15 and 16, as known from Fig. 18, the gutters 38 of the shim 26 open away from the base 12. Therefore, the lubricant from the gutters 38 is released to a position away from the base 12, and there arises the drawback that the fluid cannot sufficiently be supplied to the teeth 16 or the base 12 of the circular saw blade 10 when a work 42, such as wood, is cut.

For this reason, in order to lubricate and/or cool the base 12 sufficiently with lubricant or the like, for example, a highly-concentrated fluid including a lot of lubricant must be adopted. In this case, however, there are such defects as increase in cost for lubricant and deterioration in working environment.

Therefore, an object of the present invention is to provide a fluid supply mechanism which can achieve lubrication and/or cooling of the circular saw blade by performing excellent fluid supply, when using a circular saw blade having a thick boss type base, without having to increase in concentration of lubricant contained, and without having negative influences on cost and environment.

### Solution to Problem

This object is achieved by the fluid supply mechanism having the features of claims 1 and 2, respectively. Advantageous further developments of the invention are defined in the dependent claims.

### Brief Description of Drawings

Fig. 1 is a cross-sectional half plan view of a fluid supply mechanism according to a first embodiment of the present invention;

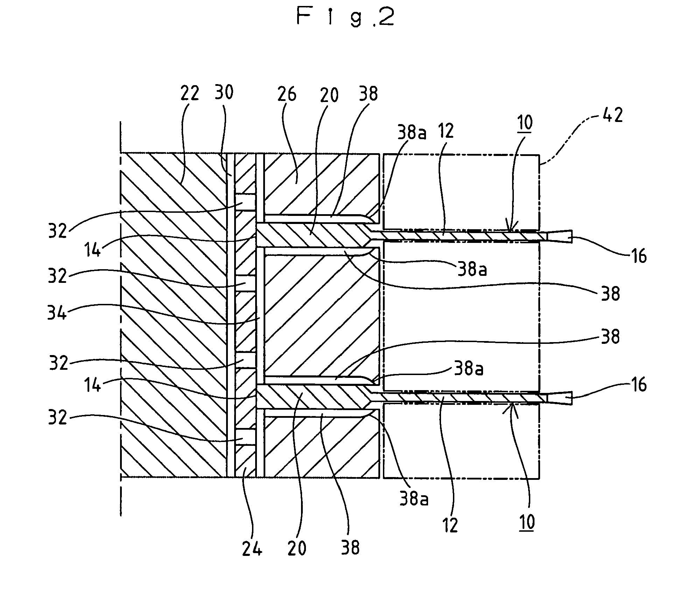

Fig. 2 is a vertically-sectional half side view of the fluid supply mechanism according to the first embodiment;

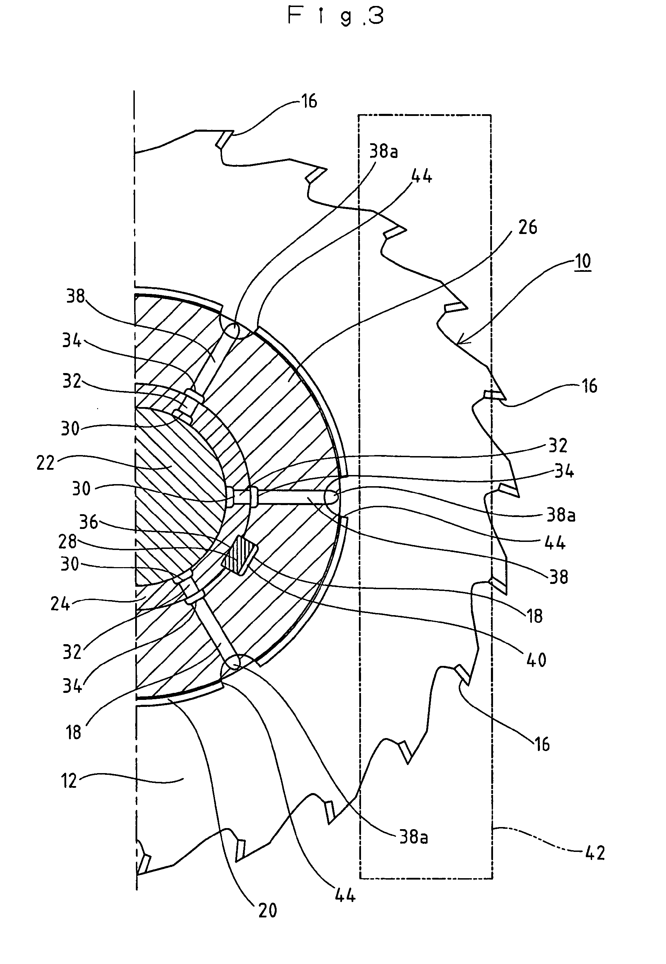

Fig. 3 is a cross-sectional half plan view of a fluid supply mechanism according to a second embodiment;

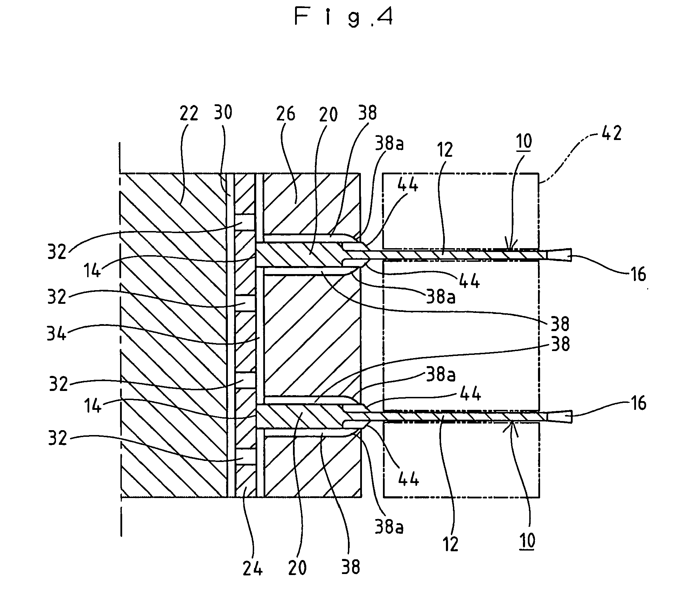

Fig. 4 is a vertically-sectional half side view of the fluid supply mechanism according to the second embodiment;

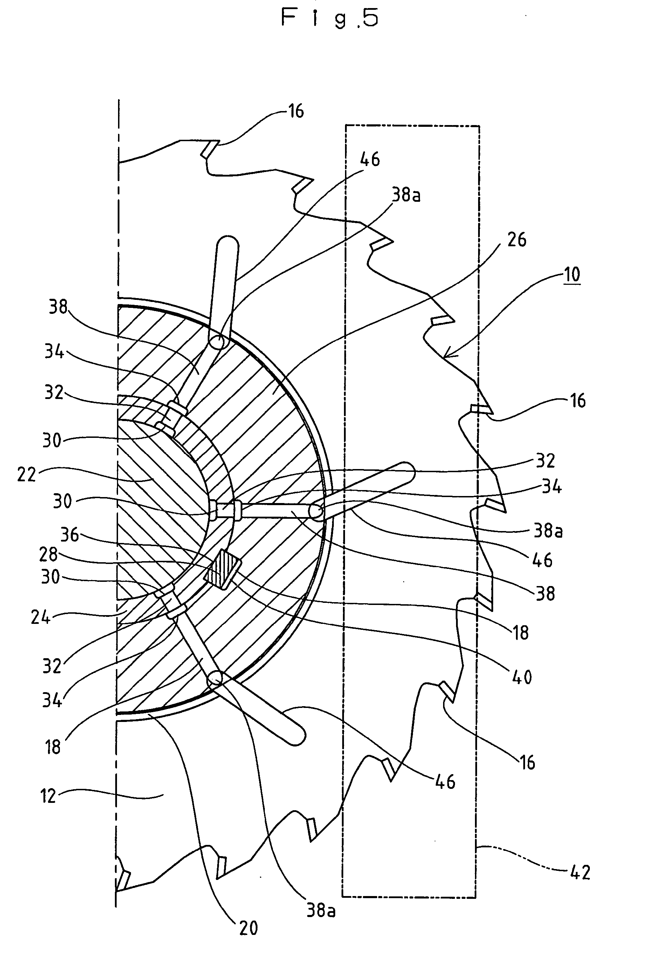

Fig. 5 is a cross-sectional half plan view of a fluid supply mechanism according to a third embodiment;

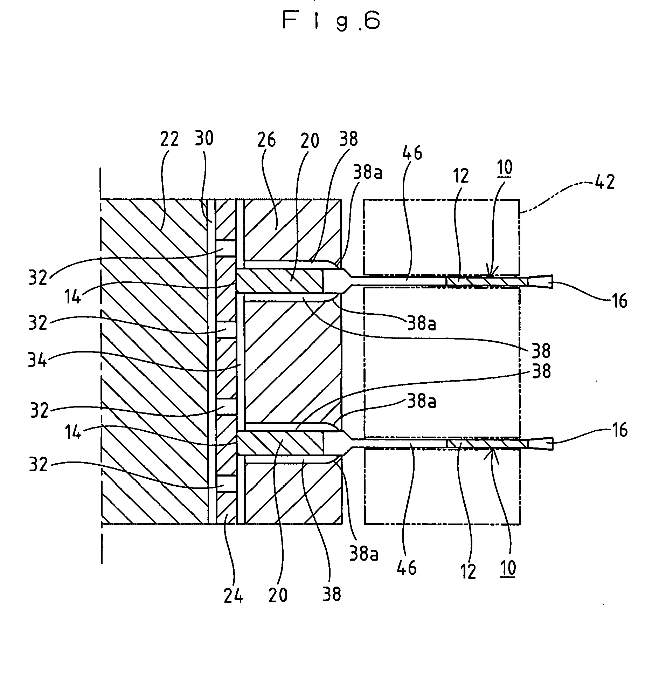

Fig. 6 is a vertically-sectional half side view of the fluid supply mechanism according to the third embodiment;

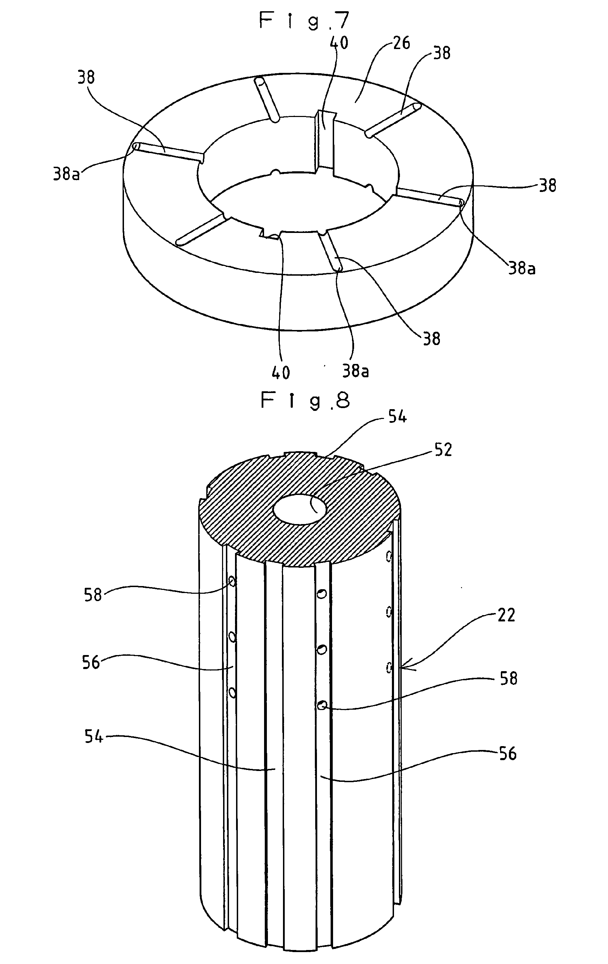

Fig. 7 is a perspective view of a shim used in a fourth embodiment;
Fig. 8 is a perspective view of a main portion of a rotary shaft used in the fourth embodiment;

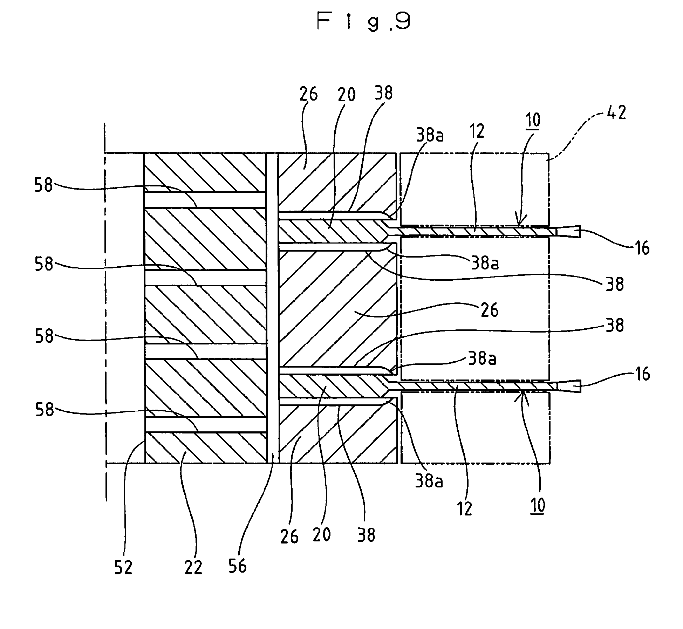

Fig. 9 is a vertically-sectional half side view of a fluid supply mechanism according to the fourth embodiment;

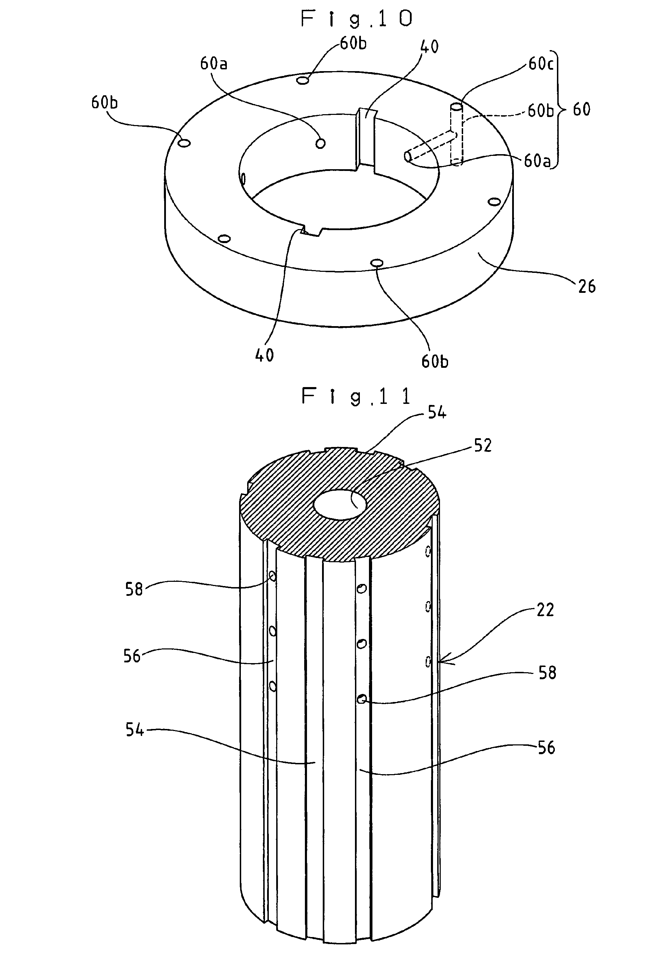

Fig. 10 is a perspective view of a shim used in a fifth embodiment;
Fig. 11 is a perspective view of a main portion of a rotary shaft used in the fifth embodiment;

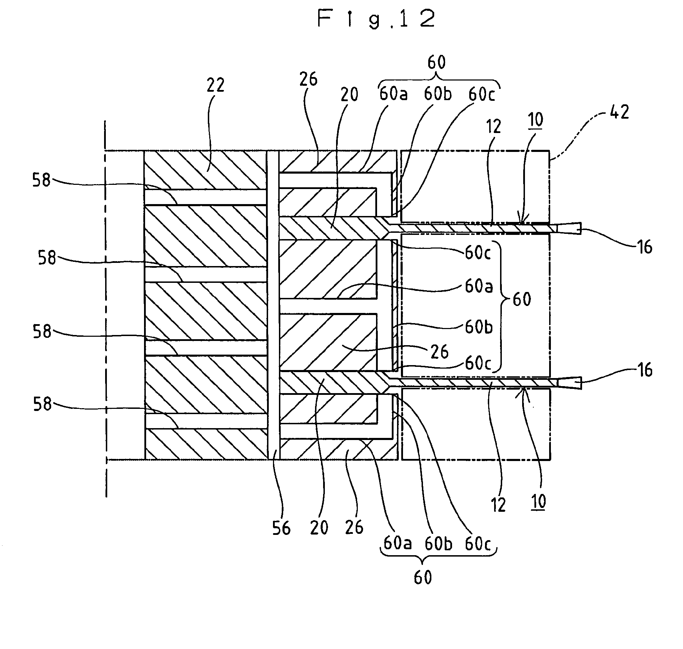

Fig. 12 is a vertically-sectional half side view of a fluid supply mechanism according to the fifth embodiment;
Fig. 13 is a plan view of a circular saw blade having an isothick type base;
Fig. 14 is a vertically-sectional side view of the circular saw blade shown in Fig. 13;
Fig. 15 is a plan view of a circular saw blade having a thick boss type base;
Fig. 16 is a vertically-sectional side view of the circular saw blade shown in Fig. 15;

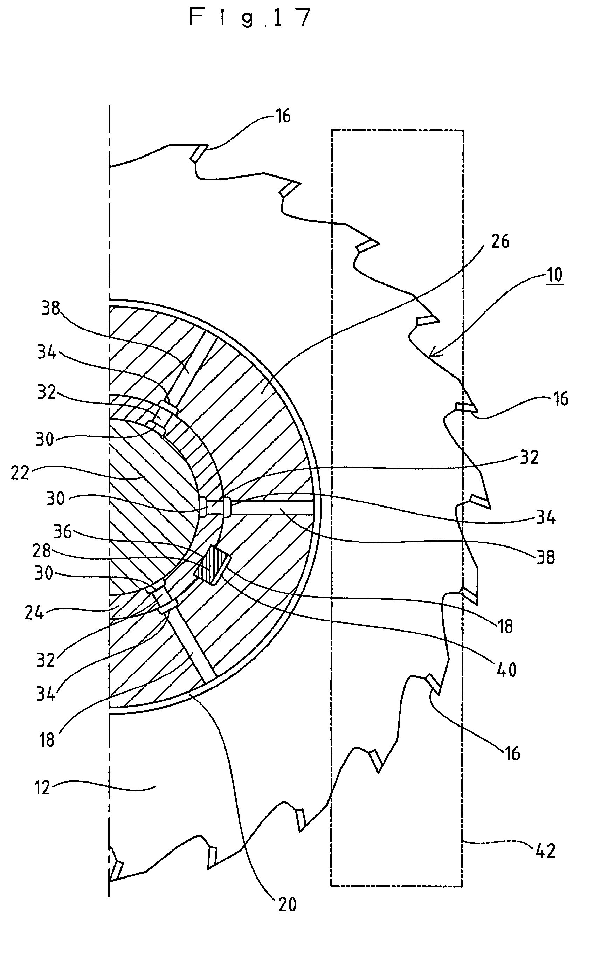

Fig. 17 is a cross-sectional half plan view of a conventional fluid supply mechanism used for the circular saw blade having a thick boss type base;
Fig. 18 is a vertically-sectional half side view of the fluid supply mechanism shown in Fig. 17;
Fig. 19 is a perspective view of a shim used in the conventional fluid supply mechanism;
Fig. 20 is a perspective view of a sleeve used in the conventional supply mechanism; and
Fig. 21 is a vertically-sectional half side view of the conventional fluid supply mechanism used for the circular saw blade having an isothick type base.

### Description of Embodiments

Preferred embodiments of a fluid supply mechanism for a rotary tool according to the present invention will be explained with reference to the accompanying drawings. Incidentally, the embodiments are assumed to be used for the circular saw blade 10 having a thick boss type base shown in Fig. 16. Furthermore, the basic configuration of the fluid supply mechanism is as described with reference to Figs. 17 to 21, and therefore the same reference numerals as the abovementioned numerals are denoted to corresponding members, and only configurations specific to the present invention will mainly be described.

### [First Embodiment]

Fig. 1 is a cross-sectional half plan view of a fluid supply mechanism according to a first embodiment, and Fig. 2 is a vertically-sectional half side view of the fluid supply mechanism. The diameter of a shim 26 in this embodiment is set slightly larger than that of the boss 20 of the circular saw blade 10. Then, terminal ends 38a formed outwards in radial direction on the gutters 38 which are provided on both faces of the shim 26 are positioned at a near side of the outer peripheral edge of the shim 26 and beyond the outer diameter of the boss 20 of the circular saw blade 10. That is, the terminal ends 38a of each gutter 38 do not open beyond the outer periphery of the shim 26 but open beyond the outer diameter of the boss 20 of the circular saw blade 10. Also, the terminal ends 38a of the gutters 38 are obliquely curved so that the terminal ends 38a are directed to the base 12 of the circular saw blade 10 when the circular saw blade 10 are clamped and fixed by the shims 26 from both sides.

Since such a configuration is adopted, when, for example, air including lubricant is transferred by pressure, the air is guided toward the base 12 by the terminal ends 38a of the gutters 38. Thus, by high-speed rotation of the circular saw blade 10, the lubricant is effectively supplied to the base 12. That is, the conventional defect that the fluid cannot effectively be supplied, which has been described with reference to Fig. 18, is eliminated.

### [Second Embodiment]

Fig. 3 is a cross-sectional half plan view of the fluid supply mechanism according to a second embodiment, and Fig. 4 is a vertically-sectional half side view of the fluid supply mechanism. The diameter of a shim 26 in this embodiment is set approximately equal to or slightly smaller than that of the boss 20 of the circular saw blade 10. Furthermore, notches 44 recessed in the radial direction are provided on the outer periphery of the thick boss 20 at positions corresponding to the terminal ends 38a of the gutters 38. Then, the terminal ends 38a formed outwards in radial direction on the gutters 38 which are provided on both faces of the shim 26 are positioned at a near side of the outer peripheral edge of the shim 26. That is, the terminal ends 38a of each gutter 38 do not open beyond the outer periphery of the shim 26 but open at the positions of the notches 44 provided on the outer periphery of the boss 20 of the circular saw blade 10. Also, the terminal ends 38a of the gutters 38 are obliquely curved so that, when the circular saw blade 10 is clamped and fixed by the shims 26 from both sides, the fluid released from the terminal ends 38a can be directed to the base 12 that is continuous with the notches 44 of the circular saw blade 10. Thereby, when, for example, air including lubricant is transferred by pressure, the air is guided toward the base 12 by the terminal ends 38a of the gutters 38, and the lubricant is effectively supplied to the base 12 by high-speed rotation of the circular saw blade 10.

### [Third Embodiment]

Fig. 5 is a cross-sectional half plan view of a fluid supply mechanism according to a third embodiment, and Fig. 6 is a vertically-sectional half side view of the fluid supply mechanism. In this embodiment, the relationship in size between the shim 26 and the boss 20 of the circular saw blade 10 and the shape of the gutters 38 formed on the shim 26 are the same as those in the second embodiment. However, the notches 44 shown in the second embodiment are not formed on the boss 20.

Further, slits 46 extending by a required length outwards in the radial direction from origins positioned slightly inside the outer periphery of the boss 20 are formed in the base 12 of the circular saw blade 10 so as to pass through the base 12. The number of slits 46 corresponds to the number of gutters 38 formed on the shim 26, and in this embodiment, it is six. Then, the terminal ends 38a of the gutters 38 on the shim 26 are correspondingly positioned at origins (initial ends) of the slits 46. Thereby, the air including lubricant transferred by pressure through the gutters 38 is supplied from the terminal ends 38a thereof toward the slits 46 of the circular saw blade 10, and thus lubrication and/or cooling of the base 12 is effectively achieved. Incidentally, this embodiment is applicable not only to the circular saw blade 10 having a thick boss type base but also to the circular saw blade having an isothick type base.

### [Fourth Embodiment]

A fourth embodiment in Figs. 7 to 9 is different from the first to third embodiments in that no sleeve is required. The rotary shaft 22 in Fig. 8 is provided, for example, in a circular saw machine, and a fluid pressure feed unit (not shown) is coupled to the rotary shaft 22, so that a fluid, such as lubricant, can be transferred by pressure to the rotary shaft 22.

That is, a fluid passage 52 with a required diameter that extends in an axial direction thereof is formed at the center of the rotary shaft 22. The fluid passage 52 is closed at one end of the rotary shaft 22 to form a so-called blind hole. And, an open end of the fluid passage 52 is coupled to the fluid pressure feed unit via, for example, a rotary seal joint. Furthermore, through holes 58 communicating to the fluid passage 52 in the radial direction and opening on the outer periphery of the rotary shaft 22 are provided in the rotary shaft 22. In this case, six vertical gutters 56 extending in the axial direction, for example, at every central angle of 60°, are formed on the outer periphery of the rotary shaft 22 such that the through holes 58 correspondingly open in each vertical gutter 56. Incidentally, the reference numeral 54 in Fig. 8 denotes a key slot, and the key slots 54 are aligned with the key slots 40 of the shim 26 that are described later to position and fix the circular saw blade 10 using the keys 28.

Next, a shim 26 shown in Fig. 7 shares a basic structure with the shims in the first embodiment shown in Figs. 1 and 2. However, the passages 34 formed on the inner surface of the shim 26 in the first embodiment are not provided in the mechanism of the fourth embodiment. That is, gutters 38 are formed on both sides of the shim 26 at predetermined intervals, for example, at every central angle of 60° in a circumferential direction of the shim 26. Here, the terminal ends 38a of the gutters 38 at an outward position in the radial direction are positioned at a near side of the outer peripheral edge of the shim 26 and beyond the outer diameter of the boss 20 of the circular saw blade 10. Therefore, the configuration of the terminal ends 38a of the gutters 38 is the same as that of the shim 26 shown in the first embodiment.

A state where the circular saw blades 10 having a thick boss type base being attached to the rotary shaft 22 using the shims 26 is shown in Fig. 9. That is, the shim 26, the circular saw blade 10 having a thick boss type base, the shim 26, the circular saw blade 10 having a thick boss type base, are sequentially attached to the rotary shaft 22, and the circular saw blades 10 are clamped and fixed by these shims 26 from both sides. Incidentally, the key slots 54 of the rotary shaft 22, the key slots 40 of the shims 26 and the key slots 18 of the circular saw blades 10 are aligned in the axial direction, then the keys 28 are inserted into these key slots, and thus, as shown in Fig. 9, the through holes 58 of the rotary shaft 22 and the gutters 38 of the shims 26 are aligned with each other in a communicated manner.

Then, a fluid, for example, lubricant, is supplied under pressure by a fluid pressure feed unit (not shown) to the fluid passage 52 of the rotary shaft 22, the lubricant is supplied to the bases 12 of the circular saw blades 10 through the fluid passage 52 of the rotary shaft 22 → the through holes 58 → the vertical gutters 56 → the gutters 38 of the shims 26. Incidentally, the gutters 38 of the shims 26 are closed by the bosses 20 of the circular saw blades 10 when the circular saw blades 10 are clamped and fixed by the shims 26. However, as described above, the terminal ends 38a of the gutters 38 are present at positions beyond the outer diameter of the bosses 20. Therefore, the lubricant transferred by pressure is effectively supplied from the terminal ends 38a to the bases 12 of the circular saw blades 10 to lubricate and/or cool the circular saw blades 10 effectively.

### [Fifth Embodiment]

A fifth embodiment in Figs. 10 to 12 as well as the fourth embodiment relates to a fluid supply mechanism that requires no sleeve. The rotary shaft 22 (Fig. 11) used in this fifth embodiment has the same configuration as that shown in Fig. 8 in the fourth embodiment, and therefore explanation thereof will be omitted. The shim 26 is as shown in Fig. 10.

That is, the shim 26 has (1) first through holes 60a opening on the inner peripheral face and extending in the radial direction, and (2) second through holes 60b opening on both sides or one side of the shim 26 and communicated to the first through holes 60a inside the shim 26 in an intersecting manner. Thus, the first through holes 60a and the second through holes 60b make up fluid supply passages 60. Incidentally, the first through holes 60a and the second through holes 60b are formed, for example, in six pairs at predetermined intervals at every central angle of 60° in a circumferential direction of the shim 26. Therefore, the fluid supply passage 60 comprising the first through hole 60a and the second through hole 60b is formed in a T shape or an L shape inside the shim 26 as shown in Fig. 12.

Also in this case, terminal ends 60c of the second through holes 60b opening on both sides or one side of the shims 26 are positioned at a near side of the outer peripheral edge of the shim 26. Also, it is preferred that the terminal ends 60c face the outer peripheral edge of the boss 20 of the circular saw blade 10 having a thick boss type base, or they are positioned beyond the outer peripheral edge thereof.

By adopting such a configuration, in the fifth embodiment, when the shims 26 and the circular saw blades 10 are sequentially attached to the rotary shaft 22 and fixed by a nut at an axial end or the like, the configuration shown in Fig. 12 is obtained.
That is, when, for example, lubricant is transferred as the fluid by pressure to the fluid passage 52 of the rotary shaft 22, the lubricant is supplied to the bases 12 of the circular saw blades 10 via the through holes 58 → the vertical gutters 56 → the first through holes 60a of the shims 26 → the second through holes 60b.

## Claims

1. A fluid supply mechanism for a rotary tool, comprising:
a required number of shims (26) attached directly or via a sleeve (24) on an outer peripheral surface of a rotary shaft (22); and
a rotary tool (10) of which the both sides are fixed and clamped by the shims (26) and which is attached, similarly to the shims, to the rotary shaft, wherein
passages (38) for fluid supply of the shims (26) communicated to passages (30, 32, 52, 58) for fluid supply formed in the rotary shaft (22) or the sleeve (24) extend from an inner peripheral surface side of the shims (26) in the outer peripheral direction, and, terminal ends (38a) of the passages (38) are formed outwards in radial direction of the shims (26) and a fluid is transferable by pressure from outside via the passages (30, 32, 52, 58) for fluid supply formed in the rotary shaft (22) or the sleeve (24),
the fluid can be supplied from the terminal ends (38a) of the passages (38) for fluid supply of the shims (26) to the rotary tool (10) so as to cool and/or lubricate the rotary tool (10) during machining a work,
the terminal ends (38a) of the passages (38) for fluid supply of the shims (26) which extend outward in radial direction are positioned at a near side of outer peripheral edges of the shims (26), **characterised in that**
the passages (38) for fluid supply of the shims (26) are gutters (38) that are formed on both-side surfaces or a single-side surface of the shims 26 and that extend from the inner peripheral surface side in the outer peripheral direction, and the terminal ends (38a) of the gutters (38) are positioned at a near side of the outer peripheral edges of the shims (26).

2. A fluid supply mechanism for a rotary tool, comprising:
a required number of shims (26) attached directly or via a sleeve (24) on an outer peripheral surface of a rotary shaft (22); and
a rotary tool (10) of which the both sides are fixed and clamped by the shims (26) and which is attached, similarly to the shims, to the rotary shaft, wherein
passages (60) for fluid supply of the shims (26) communicated to passages (30, 32, 52, 58) for fluid supply formed in the rotary shaft (22) or the sleeve (24) extend from an inner peripheral surface side of the shims (26) in the outer peripheral direction, and, terminal ends (60c) of the passages (60) are formed outwards in radial direction of the shims (26) and a fluid is transferable by pressure from outside via the passages (30, 32, 52, 58) for fluid supply formed in the rotary shaft (22) or the sleeve (24),
the fluid can be supplied from the terminal ends (60c) of the passages (60) for fluid supply of the shims (26) to the rotary tool (10) so as to cool and/or lubricate the rotary tool (10) during machining a work,
the terminal ends (60c) of the passages (60) for fluid supply of the shims (26) which extend outward in radial direction are positioned at a near side of outer peripheral edges of the shims (26) **characterised in that**
the passages (60) for fluid supply of the shims (26) are through holes (60) formed inside the shims (26) in a tubular hole shape extending from the inner peripheral surface side in the outer peripheral direction, and the terminal ends (60c) of the through holes (60) open at a near side of the outer peripheral edge of the shims (26).

3. The fluid supply mechanism for a rotary tool according to claim 1 or 2, wherein in the rotary tool (10), a boss (20) clamped from both sides by the shims (26) is set to be thicker than a base (12) existing outwards in radial direction of the boss (20).

4. The fluid supply mechanism for a rotary tool according to claim 3, wherein an outer diameter of the shims (26) is set larger than an outer diameter of the boss (20) of the rotary tool (10).

5. The fluid supply mechanism for a rotary tool according to claim 3, wherein at an outer periphery of the boss (20) of the rotary tool (10), a notch (44) facing inward in radial direction is formed at a region corresponding to the terminal ends (38a, 60c) of the passages for fluid supply (38, 60) of the shims (26).

6. The fluid supply mechanism for a rotary tool according to claim 3, wherein at the base (12) of the rotary tool (10), there is formed a slit (46) having a required length extending to the outer peripheral direction from an origin being a region corresponding to the terminal ends (38a, 60c) of the passages (38, 60) for fluid supply of the shims (26).

## Patentansprüche

1. Fluidzuführmechanismus für ein Drehwerkzeug, mit:
einer erforderlichen Anzahl an Abstandsstücken (26), die direkt oder über eine Buchse (24) an einer Außenumfangsfläche einer Drehwelle (22) angebracht sind; und
einem Drehwerkzeug (10), dessen beide Seiten durch die Abstandsstücke (26) befestigt und geklemmt sind, und das ähnlich wie die Abstandsstücke an der Drehwelle angebracht ist, wobei
sich Kanäle (38) für eine Fluidzufuhr der Abstandsstücke (26), die mit in der Drehwelle (22) oder der Buchse (24) ausgebildeten Kanälen (30, 32, 52, 58) für eine Fluidzufuhr in Verbindung sind, von einer Innenumfangsflächenseite der Abstandsstücke (26) in der Außenumfangsrichtung erstrecken, und wobei Abschlussenden (38a) der Kanäle (38) in einer radialen Richtung der Abstandsstücke (26) außen ausgebildet sind und ein Fluid durch einen Druck von der Außenseite über die in der Drehwelle (22) oder der Buchse (24) ausgebildeten Kanäle (30, 32, 52, 58) für eine Fluidzufuhr transportiert werden kann,
wobei das Fluid von den Abschlussenden (38a) der Kanäle (38) für eine Fluidzufuhr der Abstandsstücke (26) zu dem Drehwerkzeug (10) zugeführt werden kann, um das Drehwerkzeug (10) während einer Bearbeitung eines Werkstücks zu kühlen und/oder zu schmieren,
wobei die Abschlussenden (38a) der Kanäle (38) für eine Fluidzufuhr der Abstandsstücke (26), die sich in der radialen Richtung nach außen erstrecken, an einer nahen Seite von Außenumfangskanten der Abstandsstücke (26) positioniert sind, **dadurch gekennzeichnet, dass**
die Kanäle (38) für eine Fluidzufuhr der Abstandsstücke (26) Rinnen (38) sind, die an beiden Seitenflächen oder an einer einzigen Seitenfläche der Abstandsstücke (26) ausgebildet sind und sich von der Innenumfangsflächenseite in der Außenumfangsrichtung erstrecken, und wobei die Abschlussenden (38a) der Rinnen (38) an einer nahen Seite der Außenumfangskanten der Abstandsstücke (26) positioniert sind.

2. Fluidzuführmechanismus für ein Drehwerkzeug, mit:
einer erforderlichen Anzahl an Abstandsstücken (26), die direkt oder über eine Buchse (24) an einer Außenumfangsfläche einer Drehwelle (22) angebracht sind; und
einem Drehwerkzeug (10), dessen beide Seiten durch die Abstandsstücke (26) befestigt und geklemmt sind, und das ähnlich wie die Abstandsstücke an der Drehwelle angebracht ist, wobei
sich Kanäle (60) für eine Fluidzufuhr der Abstandsstücke (26), die mit in der Drehwelle (22) oder der Buchse (24) ausgebildeten Kanälen (30, 32, 52, 58) für eine Fluidzufuhr in Verbindung sind, von einer Innenumfangsflächenseite der Abstandsstücke (26) in der Außenumfangsrichtung erstrecken, und wobei Abschlussenden (60c) der Kanäle (60) in einer radialen Richtung der Abstandsstücke (26) außen ausgebildet sind und ein Fluid durch einen Druck von einer Außenseite über die in der Drehwelle (22) oder der Buchse (24) ausgebildeten Kanäle (30, 32, 52, 58) für eine Fluidzufuhr transportiert werden kann,
wobei das Fluid von den Abschlussenden (50c) der Kanäle (60) für eine Fluidzufuhr der Abstandsstücke (26) zu dem Drehwerkzeug (10) zugeführt werden kann, um das Drehwerkzeug (10) während einer Bearbeitung eines Werkstücks zu kühlen und/oder zu schmieren,
wobei die Abschlussenden (60c) der Kanäle (60) für eine Fluidzufuhr der Abstandsstücke (26), die sich in einer radialen Richtung nach außen erstrecken, an einer nahen Seite von Außenumfangskanten der Abstandsstücke (26) positioniert sind, **dadurch gekennzeichnet, dass**
die Kanäle (60) für eine Fluidzufuhr der Abstandsstücke (26) Durchgangslöcher (60) sind, die im Inneren der Abstandsstücke (26) mit einer röhrenartigen Lochform ausgebildet sind, die sich von der Innenumfangsflächenseite in der Außenumfangsrichtung erstreckt, und wobei die Abschlussenden (60c) der Durchgangslöcher (60) an einer nahen Seite der Außenumfangskante der Abstandsstücke (26) münden.

3. Fluidzuführmechanismus für ein Drehwerkzeug gemäß Anspruch 1 oder 2, wobei in dem Drehwerkzeug (10) eine Nabe (20), die durch die Abstandsstücke (26) an beiden Seiten geklemmt ist, so bemessen ist, dass sie dicker als eine Basis (12) ist, die in einer radialen Richtung der Nabe (20) außen vorhanden ist.

4. Fluidzuführmechanismus für ein Drehwerkzeug gemäß Anspruch 3, wobei ein Außendurchmesser der Abstandsstücke (26) größer eingestellt ist als ein Außendurchmesser der Nabe (20) des Drehwerkzeugs (10).

5. Fluidzuführmechanismus für ein Drehwerkzeug gemäß Anspruch 3, wobei an einem Außenumfang der Nabe (20) des Drehwerkzeugs (10) eine Kerbe (44), die in einer radialen Richtung nach innen gerichtet ist, in einem Bereich entsprechend den Abschlussenden (38a, 60c) der Kanäle für eine Fluidzufuhr (38, 60) der Abstandsstücke (26) ausgebildet ist.

6. Fluidzuführmechanismus für ein Drehwerkzeug gemäß Anspruch 3, wobei an der Basis (12) des Drehwerkzeugs (10) ein Schlitz (46) mit einer erforderlichen Länge ausgebildet ist, der sich zu der Außenumfangsrichtung von einem Ursprung erstreckt, der einen Bereich entsprechend den Abschlussenden (38a, 60c) der Kanäle (38, 60) für eine Fluidzufuhr der Abstandsstücke (26) ist.

## Revendications

1. Mécanisme d'alimentation en fluide pour un outil rotatif, comprenant :
un nombre requis de cales (26) fixées directement ou via un manchon (24) sur une surface périphérique externe d'un arbre rotatif (22) ; et
un outil rotatif (10) dont les deux côtés sont fixés et serrés par les cales (26) et qui est fixé, comme les cales, sur l'arbre rotatif, dans lequel :
des passages (38) pour l'alimentation en fluide des cales (26) en communication avec les passages (30, 32, 52, 58) pour l'alimentation en fluide formés dans l'arbre rotatif (22) ou le manchon (24) s'étendent à partir d'un côté de surface périphérique interne des cales (26) dans la direction périphérique externe, et des extrémités terminales (38a) des passages (38) sont formées vers l'extérieur dans la direction radiale des cales (26) et un fluide peut être transféré par pression depuis l'extérieur via les passages (30, 32, 52, 58) pour l'alimentation en fluide formés dans l'arbre rotatif (22) ou le manchon (24),
le fluide peut être amené des extrémités terminales (38a) des passages (38) pour l'alimentation en fluide des cales (26) à l'outil rotatif (10) afin de refroidir et/ou de lubrifier l'outil rotatif (10) pendant l'usinage d'une pièce,
les extrémités terminales (38a) des passages (38) pour l'alimentation en fluide des cales (26) qui s'étendent vers l'extérieur dans la direction radiale sont positionnées au niveau d'un côté proche des bords périphériques externes des cales (26), **caractérisé en ce que** :
les passages (38) pour l'alimentation en fluide des cales (26) sont des gouttières (38) qui sont formées sur deux surfaces latérales ou une seule surface latérale des cales (26) et qui s'étendent à partir du côté de la surface périphérique interne dans la direction périphérique externe, et les extrémités terminales (38a) des gouttières (38) sont positionnées sur un côté proche des bords périphériques externes des cales (26).

2. Mécanisme d'alimentation en fluide pour un outil rotatif, comprenant :
un nombre requis de cales (26) fixées directement ou via un manchon (24) sur une surface périphérique externe d'un arbre rotatif (22) ; et
un outil rotatif (10) dont les deux côtés sont fixés et serrés par les cales (26) et qui est fixé, comme les cales, sur l'arbre rotatif, dans lequel :
des passages (60) pour l'alimentation en fluide des cales (26) en communication avec les passages (30, 32, 52, 58) pour l'alimentation en fluide formés dans l'arbre rotatif (22) ou le manchon (24) s'étendent à partir d'un côté de surface périphérique interne des cales (26) dans la direction périphérique externe et les extrémités terminales (60c) des passages (60) sont formées vers l'extérieur dans la direction radiale des cales (26) et un fluide peut être transféré par pression depuis l'extérieur via les passages (30, 32, 52, 58) pour l'alimentation en fluide formée dans l'arbre rotatif (22) ou le manchon (24),
le fluide peut être amené des extrémités terminales (60c) des passages (60) pour l'alimentation en fluide des cales (26) jusqu'à l'outil rotatif (10) afin de refroidir et/ou lubrifier l'outil rotatif (10) pendant l'usinage d'une pièce,
les extrémités terminales (60c) des passages (60) pour l'alimentation en fluide des cales (26) qui s'étendent vers l'extérieur dans la direction radiale sont positionnées au niveau d'un côté proche des bords périphériques externes des cales (26), **caractérisé en ce que** :
les passages (60) pour l'alimentation en fluide des cales (26) sont des trous traversants (60) formés à l'intérieur des cales (26) dans une forme de trou tubulaire s'étendant à partir du côté de la surface périphérique interne dans la direction périphérique externe, et les extrémités terminales (60c) des trous traversants (60) débouchent au niveau d'un côté proche du bord périphérique externe des cales (26).

3. Mécanisme d'alimentation en fluide pour un outil rotatif selon la revendication 1 ou 2, dans lequel, dans l'outil rotatif (10), une bosse (20) serrée des deux côtés par les cales (26) doit être plus épaisse qu'une base (12) existant à l'extérieur dans la direction radiale de la bosse (20).

4. Mécanisme d'alimentation en fluide pour un outil rotatif selon la revendication 3, dans lequel un diamètre externe des cales (26) est plus grand qu'un diamètre externe de la bosse (20) de l'outil rotatif (10).

5. Mécanisme d'alimentation en fluide pour un outil rotatif selon la revendication 3, dans lequel au niveau d'une périphérie externe de la bosse (20) de l'outil rotatif (10), une encoche (44) orientée vers l'intérieur dans la direction radiale est formée au niveau d'une région correspondant aux extrémités terminales (38a, 60c) des passages pour l'alimentation en fluide (38, 60) des cales (26).

6. Mécanisme d'alimentation en fluide pour un outil rotatif selon la revendication 3, dans lequel à la base (12) de l'outil rotatif (10), on forme une fente (46) ayant une longueur requise s'étendant dans la direction périphérique externe à partir d'une origine qui est une région correspondant aux extrémités terminales (38a, 60c) des passages (38, 60) pour l'alimentation en fluide des cales (26).
